# EUROPEAN PATENT SPECIFICATION

(11) **EP 1 965 722 B1**
(45) Date of publication and mention of the grant of the patent: **01.03.2017**
(21) Application number: 06842614.7
(22) Date of filing: 19.12.2006
(51) Int. Cl.: A61C 17/02, A61C 17/028, A61C 17/022

(54) **FLUID DROPLET SYSTEM**
TRÖPFCHENREINIGUNGSVORRICHTUNG
DISPOSITIF DE NETTOYAGE PAR GOUTTELETTES

(30) Priority: 21.12.2005 US 752652 P
(43) Date of publication of application: 10.09.2008
(73) Proprietor: Koninklijke Philips N.V., 5656 AE Eindhoven (NL)
(72) Inventor: DUINEVELD, Paul, NL-5621 BA Eindhoven (NL)
(74) Representative: de Haan, Poul Erik
(86) International application number: PCT/IB2006/054956
(87) International publication number: WO 2007/072429

(56) References cited:
- WO-A-2005/070324
- US-A- 4 676 749

## Description

This invention relates generally to high-speed droplet systems for oral cleaning applications, and more specifically concerns a system for clearing a portion of a liquid film present on the teeth due to accumulation of fluid from the droplet system.

In a fluid droplet oral cleaning system, small fluid droplets are generated and then accelerated at high speeds and directed to an application target, for instance, teeth in an oral cleaning application. Such a system has been shown to have advantages in general oral cleaning effectiveness. A system for oral cleaning using fluid droplets is shown, for instance, in U.S. patent application Serial No. 60/537,690, titled Droplet Jet System For Cleaning, which is owned by the assignee of the present invention. The contents of that application are hereby incorporated by reference. Furthermore, a system for oral cleaning using fluid droplets is known from WO 2005/070324, which is also owned by the assignee of the present invention. The system known from this document includes a reservoir for fluid, and a droplet generator for creating a stream of fluid droplets from the fluid, wherein the velocity of the stream of droplets is within a range of 20 meters per second to 200 meters per second, and the size of the droplets is within a range of 5 microns to 200 microns. The fluid droplets are created using a high-speed stream of air. In operation, the fluid breaks up into droplets when it comes into contact with the fast moving air stream. The droplets are then accelerated by the continuing air stream until typically they reach nearly the same velocity as the flowing air, and are then directed outwardly from a tube through which the air is moving, through a nozzle.

However, it has been discovered that during operation of such a fluid droplet oral cleaning device, the individual fluid droplets will typically collect in the mouth of the user and will form a film of liquid (fluid) on the teeth. This is most noticeable for the teeth in the lower jaw. Even a thin liquid film, i.e. on the order of 10 microns, will interfere with the cleaning process, as subsequent droplets must pass through the liquid film in order to reach the surface of the teeth. This will seriously affect the efficiency of the plaque removal on the teeth, due to the decrease of the impact velocity of the droplets on the surface of the teeth caused by the liquid film. This disadvantage basically affects all fluid droplet systems, even those using "high-speed" (greater than 30 meters per second) droplets.

Hence, it is desirable to overcome the disadvantage of the presence of a liquid film on the target in order to ensure effective cleaning by a fluid droplet system.

Accordingly, the present invention is a system for clearing the area of impact for a fluid droplet system used for oral cleaning of the teeth, comprising: a fluid droplet system; a source of gas flow; and a gas flow directing member for directing the gas flow to an area on the teeth which has thereon a liquid film produced by fluid droplets, wherein the source of gas flow is separate from the fluid droplet system, and wherein the gas flow has a minimum velocity of 12 m/s.

Figure 1 is a schematic diagram illustrating one embodiment of the present invention.

Figure 2 is a diagram illustrating the effect of the present system on a liquid film.

Figures 3-4 are diagrams illustrating the action of a gas jet on a liquid film.

As briefly discussed above, in the operation of a fluid droplet cleaning system for use in an oral care application, a liquid film develops on the teeth from the residue of the fluid droplets striking the teeth. This occurs regardless of droplet speed. This liquid film, which is present on the teeth in both the upper and lower jaw, but is more pronounced on the lower jaw teeth, interferes with and decreases the effect of the impact of subsequent fluid droplets in the fluid droplet stream, which may be continuous or in pulses, thereby adversely affecting the normal cleaning effect of the droplets.

This adverse effect will vary to some extent, depending upon the thickness of the film and the speed of the fluid droplets directed to the teeth, although there is some cleaning effect regardless of the film thickness and the speed of the droplets. It is known that even a relatively small thin film does have a strong influence on the maximum shear stress exerted by fluid droplets on plaque present on teeth. For instance, with a liquid film thickness of only 0.015 times the radius of the fluid droplets, the maximum shear stress produced by the fluid droplets on the plaque is reduced by a factor of 4. Further reductions in shear stress occur for thicker liquid films. Hence, material removal from the teeth, such as plaque, is severely affected by a liquid film.

In the present invention, a gas jet having a sufficiently high velocity is directed toward the thin film of liquid on the teeth to remove or significantly reduce the thickness of it. The gas, which can be air, but can be other types of gas as well, blows away a portion of the liquid, either producing a hole in the liquid film to the surface of the teeth, or significantly reducing the thickness of the liquid film in the desired area where subsequent fluid droplets will land.

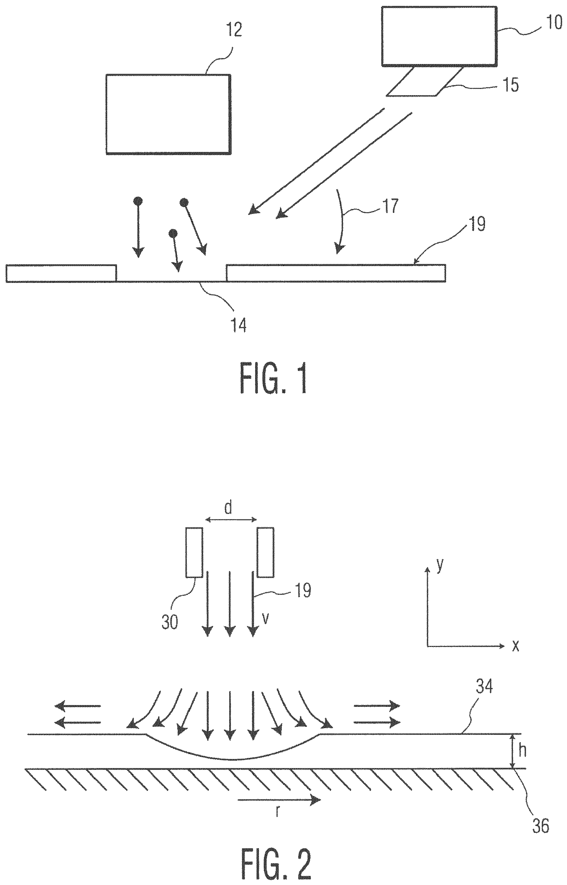

In a first embodiment, shown in Figure 1, an air jet source 10 is used with a conventional, high-speed, fluid droplet-generating system 12, with the air jet source 10 being separate from the droplet-generating system. The fluid droplets are directed toward a target such as the surface of teeth 14, or more specifically, plaque on the teeth. The fluid droplets may be generated by various known arrangements, such as shown in the '690 patent application.

The gas jet source 10, which can be a reservoir of pressurized gas at a pressure of 1.5 bar - 150 bar, preferably 20-100 bar, with a pressure regulator, includes a nozzle shown generally at 15 through which the gas exits. An air pump could be used as well. The gas jet source can include a single nozzle. The nozzle can be arranged at an angle 17 to the surface of the teeth 14, with the angle being in the range of 60-70° from the surface of the teeth, up to and including a 90° angle, i.e. at right angles to the surface of the teeth, which in some cases is the most desirable. In the arrangement of Figure 1, the source 10 and direction of the gas are separate from the droplet-generating system 12. The liquid layer is shown at 19.

In general, gas flow can be used in various arrangements and in combination with various fluid droplet systems to provide an effective clearing of the impact area for subsequent fluid droplets.

Figure 2 shows the impact of an air jet 19 from a gas source (not shown) on a fluid film 34. The exit gas jet nozzle is indicated at 30, with the air jet being directed at right angles to the liquid film 34, which has a particular height h on a surface to be cleaned 36, such as a tooth. In describing the effect of the gas jet on a liquid film, the system has an air jet with a diameter d, which impacts the liquid with a velocity V, on a film of liquid with thickness h, the liquid in the film having a density p, a dynamic viscosity µ, and a surface tension s.

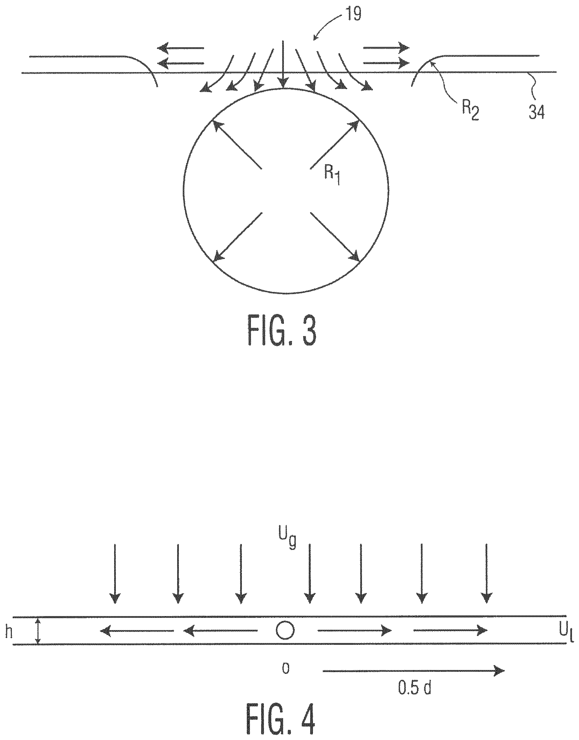

As shown in Figures 2 and 3, air jet 19 deforms the liquid layer 34 in a curved pattern. The impacting air jet exerts a pressure on the liquid film. The liquid/air interface will change its shape, i.e. its curvature, as the air impacts the film.

Figure 2 represents a situation where the gas jet pressure is constant over the diameter of the jet opening and outside that diameter the excess gas pressure is zero. The magnitude of the gas pressure can be found from the Bernoulli equation.

In this arrangement, the velocity of the air jet has a component in the y direction which is outside the diameter of the actual originating gas jet diameter. There is a difference in action where the thickness of the liquid layer is similar to or smaller than the diameter of the gas jet in one case, and in another case where the liquid layer is much thicker than the diameter of the gas jet. In the first situation, the minimum gas pressure necessary to make a hole in the film will be smaller than the case where the liquid film is much thicker than the diameter of the gas jet.

The minimum gas velocity, in the case where the thickness of the film is small, with typical values of h=20 µm, d=0.5 mm, =0.07 N/m and =1.18 kg/m3, will be approximately 12 m/s, which is quite low.

At the other extreme, where the liquid film is substantially thicker than the diameter of the jet, the velocity will be approximately 31 m/s. Hence, for a normal range of thickness, the gas velocity will be typically in the range of 12-31 m/s to accomplish the desired result of making a hole in the liquid film.

The value of gas pressure necessary to create a hole in the liquid film will increase as the liquid film thickness increases. For a liquid thickness of 1.5 mm, for example, which is on the order of the diameter of a traditional gas jet, the gas velocity necessary to create a hole in the liquid is approximately 16 m/s. The opening can be made much larger than the gas jet diameter, however, by increasing the gas pressure as well as the velocity.

The impacting gas jet on the liquid film generates a pressure difference which creates extra curvature in the liquid/air interface. When the radius of the hole increases, the velocity of the gas will decrease.

In respect of the horizontal gas velocity V1(r), it is noted that with a pressure difference of 3.3 - 103 Pa, and a gas jet radius of 1.1 mm, a radial velocity of approximately 5 m/s results. The generated pressure difference is typically 15 Pa. The curvature of the interface is defined by radius R1 and radius R2 (Figure 3). R1 gives a larger pressure in the air, while R2 gives a larger pressure in the liquid. Typically due to the smaller radius of curvature of R1 than R2, however, the total curvature gives a larger pressure in the air, close to the calculated pressure of 15 Pa.

The above indicates that it is relatively easy to produce a hole in a liquid film at nearly all liquid thicknesses, with gas velocities in the range of 15-30 m/s, which are relatively low in a gas-assisted fluid droplet system. The diameter of the hole in the liquid layer can be made much larger than the diameter of the jet opening, depending upon the velocity and pressure of the gas.

Another significant issue besides the velocity of the gas is the time that is necessary for the gas to form a hole in the liquid, i.e. clearing a specified area in time for subsequent fluid droplets to be effective. Considering the arrangement shown in Figure 4, where an air jet is directed toward a liquid film 40, at the center of the gas jet 42, the velocity in the liquid is zero (due to symmetry), and the pressure is equal to, 0.5ρgV2 while at the edge of the gas jet (r=0.5d), the pressure will be atmospheric.

Although it takes a long time to remove, in reality, the thickness of the liquid film rapidly opens when it is decreased to the order of 20 nm. Accordingly, a liquid film that is initially 10 µm thick will thin down to 20 nm in a time of 3· 10-4s, with a gas velocity of 150 m/s and a jet diameter of 0.5 mm. For a 1.5 mm film, it would take approximately twice as long. Hence, the time for a gas jet to produce a liquid thinning fast enough to be effective for subsequent drops is quite possible.

Thus, a system has been disclosed which in a convenient and rapid manner produces a clearing of liquid film on surfaces such as teeth, produced in the operation of a fluid droplet and cleaning system. This present arrangement maintains the effectiveness of cleaning by liquid droplets.

## Claims

1. A system for clearing the area of impact for a fluid droplet system (12) used for oral cleaning of the teeth, comprising: a fluid droplet system (12); a source of gas flow (10); and a gas flow directing member (15) for directing the gas flow to an area on the teeth which has thereon a liquid film (19) produced by fluid droplets, **characterized in that** the source of gas flow (10) is separate from the fluid droplet system (12), wherein the gas flow has a minimum velocity of 12 m/s.

2. The system of claim 1, wherein the velocity of the gas flow is in the range of 12-31 m/s.

3. The system of claim 1, wherein the gas flow is air.

4. The system of claim 1, wherein a direction of the gas flow is separate from the fluid droplet system (12).

5. The system of claim 1, wherein the gas flow is in the form of pulses of air directed toward the liquid film and the fluid droplets are also in the form of pulses.

6. The system of claim 1 , wherein the gas flow is in the form of a continuous stream directed toward the liquid film.

7. The system of claim 1, wherein the fluid droplets are accelerated by a high-speed flow of gas (21), and wherein the high-speed gas flow is used to clear the liquid film in addition to accelerating the fluid droplets.

## Patentansprüche

1. System zum Freimachen des Wirkungsbereichs für ein Flüssigkeitströpfchen-System (12), das zur oralen Reinigung der Zähne verwendet wird, Folgendes umfassend: ein Flüssigkeitströpfchen-System (12); eine Gasstrom-Quelle (10); und ein Gasstrom-Leitelement (15) zum Leiten des Gasstroms in einen Bereich auf den Zähnen, der darauf einen Flüssigkeitsfilm (19) aufweist, der durch Flüssigkeitströpfchen erzeugt wird, **dadurch gekennzeichnet, dass** die Gasstrom-Quelle (10) vom Flüssigkeitströpfchen-System (12) getrennt ist, wobei der Gasstrom eine Mindestgeschwindigkeit von 12 m/s aufweist.

2. System nach Anspruch 1, wobei die Geschwindigkeit des Gasstroms in einem Bereich von 12-31 m/s liegt.

3. System nach Anspruch 1, wobei der Gasstrom Luft ist.

4. System nach Anspruch 1, wobei eine Richtung des Gasstroms vom Flüssigkeitströpfchen-System (12) getrennt ist.

5. System nach Anspruch 1, wobei der Gasstrom in Form von Luftimpulsen auftritt, die in Richtung des Flüssigkeitsfilms geleitet werden, und die Flüssigkeitströpfchen ebenfalls in Form von Impulsen auftreten.

6. System nach Anspruch 1, wobei der Gasstrom in Form eines kontinuierlichen Stroms auftritt, der in Richtung des Flüssigkeitsfilms geleitet wird.

7. System nach Anspruch 1, wobei die Flüssigkeitströpfchen durch einen Hochgeschwindigkeitsstrom von Gas (21) beschleunigt werden, und wobei der Hochgeschwindigkeitsgasstrom genutzt wird, um zusätzlich zum Beschleunigen der Flüssigkeitströpfchen den Flüssigkeitsfilm freizumachen.

## Revendications

1. Système permettant d'éliminer la zone d'impact d'un système de gouttelettes de fluide (12) utilisé pour l'hygiène buccale des dents, comprenant : un système de gouttelettes de fluide (12) ; une source d'écoulement de gaz (10) ; et un organe d'orientation d'écoulement de gaz (15) pour orienter l'écoulement de gaz vers une zone sur les dents qui présente sur celle-ci un film liquide (19) produit par des gouttelettes de fluide, **caractérisé en ce que** la source d'écoulement de gaz (10) est séparée du système de gouttelettes de fluide (12), dans lequel l'écoulement de gaz possède une vitesse minimale de 12 m/s.

2. Système selon la revendication 1, dans lequel la vitesse de l'écoulement de gaz est comprise dans la plage allant de 12 à 31 m/s.

3. Système selon la revendication 1, dans lequel l'écoulement de gaz est de l'air.

4. Système selon la revendication 1, dans lequel une orientation de l'écoulement de gaz est séparée du système de gouttelettes de fluide (12).

5. Système selon la revendication 1, dans lequel l'écoulement de gaz est sous forme d'impulsions d'air orientées vers le film liquide et les gouttelettes de fluide sont également sous forme d'impulsions.

6. Système selon la revendication 1, dans lequel l'écoulement de gaz est sous forme d'un flux continu orienté vers le film liquide.

7. Système selon la revendication 1, dans lequel les gouttelettes de fluide sont accélérées par un écoulement de gaz à grande vitesse (21), et dans lequel l'écoulement de gaz à grande vitesse est utilisé pour éliminer le film liquide en plus d'accélérer les gouttelettes de fluide.
